Europäisches Patentamt

European Patent Office

Office européen des brevets

(19)

(11) Publication number: **0 113 016**

**B1**

(12)

# EUROPEAN PATENT SPECIFICATION

(45) Date of publication of patent specification: **05.09.90**

(51) Int. Cl.⁵: **H 04 N 1/40**

(21) Application number: **83111645.4**

(22) Date of filing: **22.11.83**

(54) Correction of shading effects in video images.

(30) Priority: **30.12.82 US 454909**

(43) Date of publication of application:
**11.07.84 Bulletin 84/28**

(45) Publication of the grant of the patent:
**05.09.90 Bulletin 90/36**

(84) Designated Contracting States:
**DE FR GB IT**

(56) References cited:
**US-A-3 621 129**
**US-A-3 979 555**

**PATENT ABSTRACTS OF JAPAN, vol. 6, no. 247
(E-146)1125r, 7th December 1982 & JP-A-57-147
375**

**PATENT ABSTRACTS OF JAPAN, vol. 5, no. 197
(E-86)869r, 15th December 1981 & JP-A-56-119
575**

(73) Proprietor: **International Business Machines
Corporation
Old Orchard Road
Armonk, N.Y. 10504 (US)**

(72) Inventor: **Anastassiou, Dimitris
3028 34th Street
Long Island City New York 11103 (US)**
Inventor: **Pennebaker, William Boone
Crane Road
Carmel New York 10512 (US)**

(74) Representative: **Burt, Roger James, Dr. et al
IBM United Kingdom Limited Intellectual
Property Department Hursley Park
Winchester Hampshire SO21 2JN (GB)**

## Description

Background of the Invention

1. Field of the Invention

The present invention relates to image data enhancement apparatus and methods, and more particularly to apparatus and methods of filtering undesired shading effects from video images.

2. Description of the Prior Art

In the prior art there are many image data processing systems available. The following are systems representative of the prior art.

US-A-3,621,129 relates to devices for enhancing images by quantizing picture element levels into binary digital signals employing a threshold which is derived from the gray scale values of the image under analysis. The apparatus of the patent examines gray scale values of picture elements immediately preceeding and succeeding a feature under analysis and a variable threshold is generated which is derived from a mean value between tbe maximum white signal level and the maximum black signal level immediately before and after the feature under analysis. The patent does not acquire a histogram of distribution of gray scale intensity levels in the entire image to provide a uniform correction but rather provides only a localized threshold calculation.

US-A-3,979,555 relates to a histogram equalization system that adaptively redistributes the intensity levels of video signals in order to provide an equal number of elements at all display intensity levels.

The patent does not relate generally to a method of correcting shading effects video images where a correction value is calculated from the variations in background level in the entire image.

US-A-3,800,078 teaches a digitally compensated scanning system wherein an initial scan of black or background information is stored in a look-up table and compared to desired data signals to eliminate undesired variations or noise resulting from photodiode leakage current or other noise sources.

The patent does not show a method of oorrecting shading effects in video images in which a histogram of distribution of gray scale intensity levels is acquired and used to calculate a threshold value and a range of permissable background gray scale variations which generates a correction signal which when combined with the raw data provides an output signal which is corrected for undesired shading effects.

US-A-4,232,400 shows an echo control system for an adaptive echo canceller which cancels an echo signal while successively estimating the transmission characteristic of an echo path which includes means for filtering by convolution a transmitted signal including echo characteristics.

The patent does not teach a method of correcting shading effects in video images using a histogram of distribution of gray scale intensity levels for calculating maximum white, maximum black and threshold values and generating a correction signal to eliminate shading effects.

An article entitled "Digital Processing Techniques for Encoding of Graphics" which appeared in the Proceedings of the IEEE, Vol. 68, No. 7, July 1980 at page 757 and following provides a survey of techniques for preprocessing input documents having noise contents which create poor data compression ratios.

The article discusses a piece wise local approach to shading correction in which a number of small overlapping samples or windows are examined and a threshold is established for each of these windows. The approach presents a potential problem with respect to different thresholds at either side of a boundary between adjacent windows. Discontinuities in the threshold going from window to window may result in undesired effects in the image. The article does not present a global shading correction algorithm in which the shading for the entire image is corrected without discontinuity.

The prior art discussed above does not teach nor suggest the present invention as disclosed and claimed herein.

Summary of the Invention

Therefore, it is an object of the present invention to correct shading effects in video images having a plurality of picture elements where each picture element is represented by a gray scale intensity value by a method including the steps of generating a histogram of distribution of gray scale intensity values of picture elements in the image, calculating a maximum white gray scale value, a maximum black gray scale value and an intermediate gray scale value from the histogram, determining the image polarity from the intermediate value and the extreme gray scale values, determining a range of permitted background gray scale intensity values, sampling gray scale intensity values in a predetermined region around a pel whose gray scale value is to be corrected for shading, calculating a correction value for the current picture element by comparing the current picture element gray scale value with the range of background gray scale variations, setting the correction value to a predetermined constant if the current picture element gray scale intensity value is outside the range of background gray scale variations, correcting the current picture element of gray scale intensity value by subtracting the correction value from the current picture element gray scale value to achieve a shading corrected value for the current picture element and executing the above steps on each picture element in the image to correct for undesired shading effects throughout the image.

It is another object of the present invention to correct shading effects in video images as above by a method further including the step of repeating the sampling over an expanded region if the maximum color gray scale value representing data is less than a predetermined value.

It is yet another object of the present invention to correct shading effects in video images as above wherein an average value is calculated for background pels in a region around the current pel to provide a basis for calculating a correction value.

A method of correcting shading effects in video images having a plurality of pels, wherein each of said pels is represented by a gray scale intensity signal having a plurality of bits, comprising the steps of:

a. generating a histogram of distribution of gray scale intensity levels of pels in the entire image;

b. calculating from said histogram a maximum white gray scale intensity value, a maximum black gray scale intensity value and a gray scale value intermediate these values;

c. determining a range of background gray scale variation by comparison of the values calculated in step (b);

d. sampling gray scale intensity values of pels in a region around a current pel;

e. calculating a correction value for a current pel by comparison of said sampled intensities to one or more of said values calculated in (b) and to said range of background variation;

f. correcting said current pel gray scale value by subtracting said correction value therefrom to achieve a shading corrected value for said current pel;

g. executing each of the above steps for each pel in said image to correct for undesired shading effects in said image.

Accordingly, a method of correcting shading effects in video images according to the present invention employs an image processing system including a plurality of full image buffers, means for providing a histogram calculation for the image to be corrected and means for controlling the operation of the image processor including the steps of generating and storing a histogram of distribution of gray scale intensity values for all picture elements in the image; calculating from the histogram an extreme white and extreme black gray scale value and an intermediate value for the image; determining image polarity from the intermediate value and its relationship to the extreme white and extreme black gray scale values; determining a range of permitted background gray scale intensity of variations from the steps of calculating and determining; sampling gray scale intensity value of picture elements in a region around a current picture element to be corrected; calculating a correction value for the current picture element from the background gray scale value determined from the previous step; executing the above steps for each picture element in the image to provide a uniform shading correction throughout a video image.

The foregoing and other objects, features and advantages of the invention will be apparent from the more particular description of the preferred embodiments of the invention, as illustrated in the accompanying drawing.

Brief Description of the Drawing

FIG. 1.1 shows a character of a video image intercepted by a scan line to produce a video signal.

FIG. 1.2 shows an idealized video signal generated from the character of FIG. 1.1.

FIG. 1.3 shows a video signal which includes shading defects from camera characteristics, lighting or the like.

FIG. 2 is a block diagram of apparatus according to the present invention for correcting shading defects in a video image.

FIG. 3 is a diagram showing a histogram of the number of occurrences of pel intensity values before shading correction.

FIG. 4 is a histogram after shading correction has been performed in accordance with the apparatus and method of the present invention.

FIG. 5 is a flowchart of the method for performing shading corrections on digital video images in accordance with a second embodiment of the present invention.

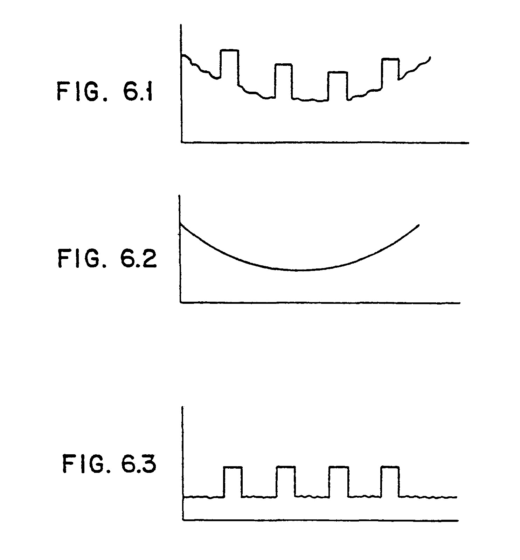

FIG. 6.1 is a diagram showing an uncorrected video signal having a concave shading defect. FIG. 6.2 is a diagram showing the concave shading defect removed from the video signal.

FIG. 6.3 is a diagram showing the shading corrected video signal in accordance with the present invention.

Description of Preferred Embodiments

Most images captured from television cameras have substantial shading problems, even when the cameras incorporate shading correction circuitry. The shading, or low spacial frequency variations, in the image can cause problems when the image is to be converted by thresholding to a graphics image having one or two bits per pel (picture element).

Apparatus and method is shown for correction of the shading effects. The method according to the invention may be implemented by a commercially available image processor such as a Ginnell gmr-270 operating under the control of a digital data processing system such as the IBM Series I.

The shading correction method and apparatus according to the present invention is based upon the following concept. Gray scale values in a general neighborhood sround a given pel are sampled. The samples must be far enough from the pel being corrected and from each other that any data related information content shows essentially no correlation between samples or with the pel being corrected. The

3

samples should be closely enough spaced, however, that an accurate estimate of the low spacial frequency shading effects can be obtained. As a practical matter, samples should be taken at a radius distance from the current pel greater than the character size of the text data and perhaps in the range of 10 to 20 pel distances from the current pel. In one embodiment, the neighborhood samples may be taken in a generally circular pattern around the current pel.

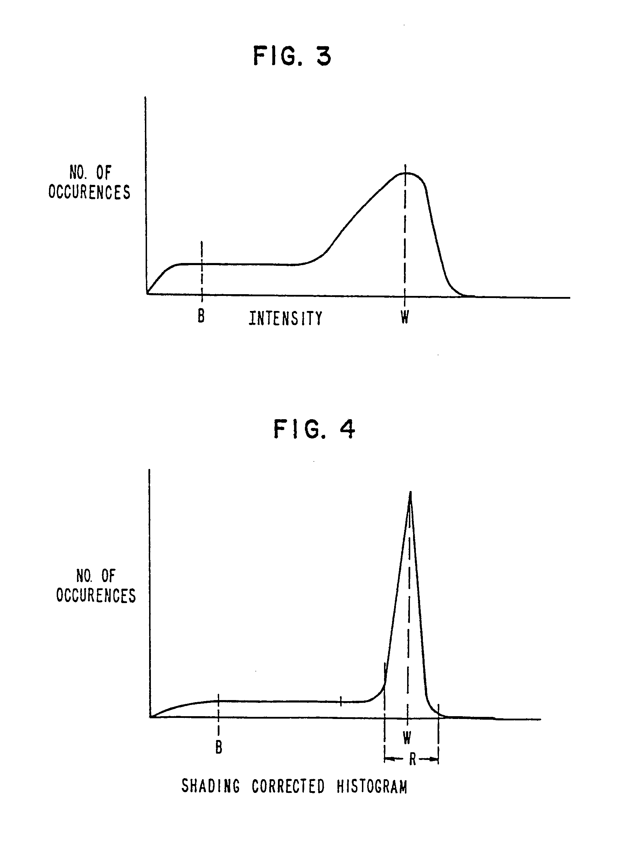

Sampling of the neighborhood as described above has a nonzero probability of including pels containing text information. If a given document is 10% black and 90% white, the samples in a given neighborhood will have a comparable distribution. This will introduce a statistical noise to the sample and thus to the shading correction which can be suppressed if an estimate is available of the likely range of background color variation. This estimate can be obtained from a histogram of the image such as is shown in FIG. 4. If a pel is found to have a color value outside the likely range for background, the correction value for that pel is set to zero. Thus, even for the worst possible case where all samples are outside of the permitted range of background variation, the result is equivalent to no correction being made.

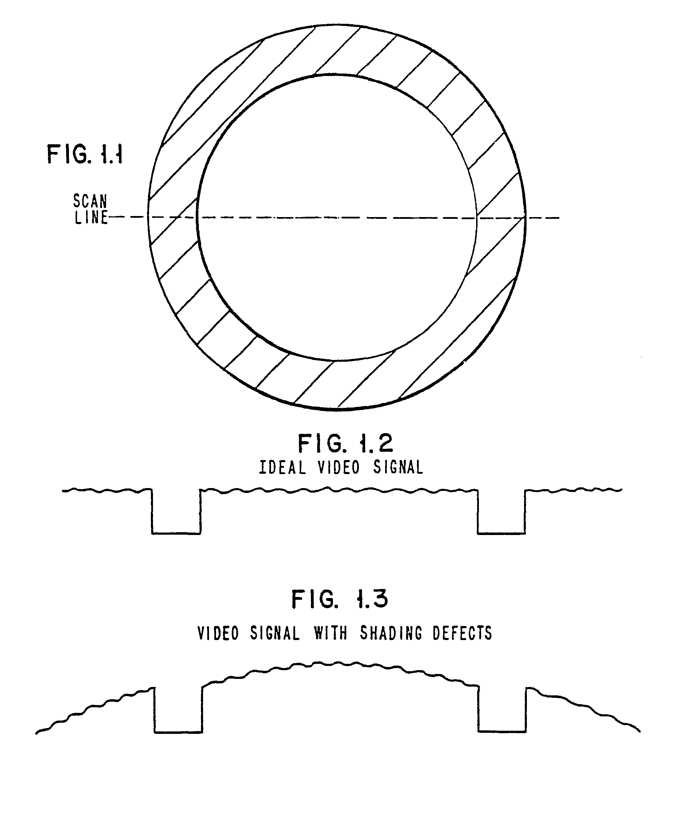

Referring now to FIGS. 1.1, 1.2 and 1.3, the generation of a video signal with shading effects will be discussed. FIG. 1.1 shows a text data character such as 0 being intercepted by a horizontal scan line.

Ideally, a black character on a white paper background would produce a video signal such as is shown in FIG. 1.2 having a relatively uniform flat background white level except for areas where black text data occurs at which point the video signal would switch to the black level.

As can be seen in FIG. 1.3, the actual video signal representative of the 0 of FIG. 1.1 includes shading effects which create ambiguities in separating text data from background in an image. It can be seen in FIG. 1.3, that the shading of the paper background causes a gray scale variation in areas where no text data appears which can inhibit efficient data compression and transmission and create undesired artifacts in the transmitted image.

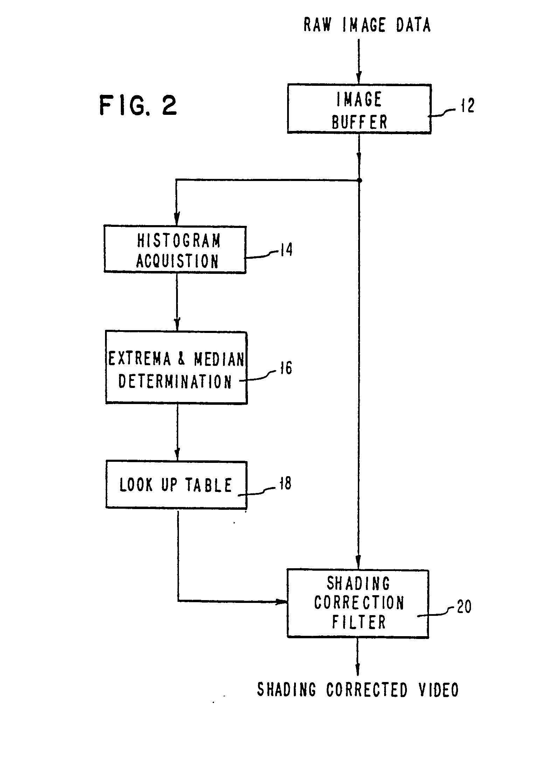

Referring now to FIG. 2, apparatus according to the present invention will be described. A video signal containing image data is stored in image buffer 12 in such a way that access may be had to an intensity value for each pel in an image. The data in image buffer 12 is sampled by the histogram aquisition circuit 14 to determine the gray level distribution of pels in the image. FIG. 3 shows such a histogram before shading correction. Note that for a black data on white background image the majority of pels are near the white intensity values since in a black on white image there are many more background pel positions than there are data pel positions. There are many techniques for acquiring and presenting histogram information including that shown in US-A-3,979,555 discussed above.

Extreme white and extreme black intensity values are calculated by determination circuit 16 which also calculates a value intermediate the white and black extremes such as the median or the mean. Structure to perform this determination is in the prior art. One example of such structure is shown in US-A-3,621,129 discussed above.

Determination circuit 16 further determines from an analysis of the majority of occurrences of pels in the histogram whether the image is black data on white background or white data on a black background. The above-mentioned US-A-3,621,129 discusses such a determination and shows apparatus for implementing such a function.

A range of acceptable background color intensity variation is determined by calculating the difference between the median calculated above and the majority color (extreme such as white). FIG. 4 shows a corrected Histogram with acceptable range R of background intensity variations. Access is then made to look up table 18 which has as an input a multibit digital data signal representing the gray scale intensity value for one of the samples in the selected neighborhood around a current pel. The output from the look·up table is a signal representing the difference between the input intensity value and the median previously calculated, except that if the difference value exceeds the permitted range for background as determined above the output of the look up table for that pel is set to zero representing no correction made. In a first embodiment of the invention, further samples are taken in the selected neighborhood point by point around the current pel to be corrected and the correction terms generated by the look up table are summed. An average value is obtained by dividing the sum of correction terms by the number of samples taken. This averaged correction value is used to correct the current pel intensity value for shading effects in shading correction filter 20. The shading corrected intensity value of the current pel is determined by the following equation:

$$X' = X + (M-A).$$

where
X' is the corrected value of the current pel.
X is the original value of the current pel.
M is the median value and
A is the average value of the neighborhood background determined above.

As was discussed above, the method according to the present invention may be implemented using a Ginnell gmr-270 image processor. However, a typical gray scale signal may have eight bits representing 256 discrete gray scale levels ranging from white to black. The image processor is limited to a five bit wide data path for processing. Therefore, the eight bit gray scale signal must be mapped to a five bit wide signal for processing by the image processor.

Table I is an example of a look up table for this. Fach block of four hexadecimal elements as shown consists of two sub-blocks each of two elements, so that in all there are 256 sub-blocks. Each sub-block is addressed by a respective eight bit input, and represents five output bits, in that the first element, 0 or 1 represents the first bit, and the next hexadecimal element represents the remaining four bits in binary code e.g. "1f" represents the five bit output "11111".

Table II shows the look up table transfer function for selecting a maximum white intensity value from two inputs each of which have been mapped to five bit wide signals.

## TABLE I

| | | | | | | | |
|------|------|------|------|------|------|------|------|
| 0000 | 0000 | 0000 | 0000 | 0000 | 0000 | 0000 | 0000 |
| 0000 | 0000 | 0000 | 0000 | 0000 | 0000 | 0000 | 0000 |
| 0000 | 0000 | 0000 | 0000 | 0000 | 0000 | 0000 | 0000 |
| 0000 | 0000 | 0000 | 0000 | 0000 | 0000 | 0000 | 0000 |
| 0000 | 0000 | 0000 | 0000 | 0000 | 0000 | 0000 | 0000 |
| 0000 | 0000 | 0000 | 0000 | 0000 | 0000 | 0000 | 0001 |
| 0202 | 0304 | 0505 | 0607 | 0808 | 090a | 0b0b | 0c0d |
| 0e0e | 0f10 | 1112 | 1213 | 1415 | 1516 | 1718 | 1819 |
| 1a1b | 1b1c | 1d1e | 1e1f | 1f1f | 1f1f | 1f1f | 1f1f |
| 1f1f | 1f1f | 1f1f | 1f1f | 1f1f | 1f1f | 1f1f | 1f1f |
| 1f1f | 1f1f | 1f1f | 1f1f | 1f1f | 1f1f | 1f1f | 1f1f |
| 1f1f | 1f1f | 1f1f | 1f1f | 1f1f | 1f1f | 1f1f | 1f1f |
| 1f1f | 1f1f | 1f1f | 1f1f | 1f1f | 1f1f | 1f1f | 1f1f |
| 1f1f | 1f1f | 1f1f | 1f1f | 1f1f | 1f1f | 1f1f | 1f1f |
| 1f1f | 1f1f | 1f1f | 1f1f | 1f1f | 1f1f | 1f1f | 1f1f |
| 1f1f | 1f1f | 1f1f | 1f1f | 1f1f | 1f1f | 1f1f | 1f1f |

## TABLE II

| | | | | | | | |
|------|------|------|------|------|------|------|------|
| 0001 | 0203 | 0405 | 0607 | 0809 | 0a0b | 0c0d | 0e0f |
| 1011 | 1213 | 1415 | 1617 | 1819 | 1a1b | 1c1d | 1e1f |
| 0101 | 0203 | 0405 | 0607 | 0809 | 0a0b | 0c0d | 0e0f |
| 1011 | 1213 | 1415 | 1617 | 1819 | 1a1b | 1c1d | 1e1f |
| 0202 | 0203 | 0405 | 0607 | 0809 | 0a0b | 0c0d | 0e0f |
| 1011 | 1213 | 1415 | 1617 | 1819 | 1a1b | 1c1d | 1e1f |
| 0303 | 0303 | 0405 | 0607 | 0809 | 0a0b | 0c0d | 0e0f |
| 1011 | 1213 | 1415 | 1617 | 1819 | 1a1b | 1c1d | 1e1f |
| 0404 | 0404 | 0405 | 0607 | 0809 | 0a0b | 0c0d | 0e0f |
| 1011 | 1213 | 1415 | 1617 | 1819 | 1a1b | 1c1d | 1e1f |
| 0505 | 0505 | 0505 | 0607 | 0809 | 0a0b | 0c0d | 0e0f |
| 1011 | 1213 | 1415 | 1617 | 1819 | 1a1b | 1c1d | 1e1f |
| 0606 | 0606 | 0606 | 0607 | 0809 | 0a0b | 0c0d | 0e0f |
| 1011 | 1213 | 1415 | 1617 | 1819 | 1a1b | 1c1d | 1e1f |

TABLE II (continued)

```
0707  0707  0707  0707  0809  0a0b  0c0d  0e0f
1011  1213  1415  1617  1819  1a1b  1c1d  1e1f
0808  0808  0808  0808  0809  0a0b  0c0d  0e0f
1011  1213  1415  1617  1819  1a1b  1c1d  1e1f
0909  0909  0909  0909  0909  0a0b  0c0d  0e0f
1011  1213  1415  1617  1819  1a1b  1c1d  1e1f
0a0a  0a0a  0a0a  0a0a  0a0a  0a0b  0c0d  0e0f
1011  1213  1415  1617  1819  1a1b  1c1d  1e1f
0b0b  0b0b  0b0b  0b0b  0b0b  0b0b  0c0d  0e0f
1011  1213  1415  1617  1819  1a1b  1c1d  1e1f
0c0c  0c0c  0c0c  0c0c  0c0c  0c0c  0c0c  0e0f
1011  1213  1415  1617  1819  1a1b  1c1d  1e1f
0d0d  0d0d  0d0d  0d0d  0d0d  0d0d  0d0d  0e0f
1011  1213  1415  1617  1819  1a1b  1c1d  1e1f
0e0e  0e0e  0e0e  0e0e  0e0e  0e0e  0e0e  0e0f
1011  1213  1415  1617  1819  1a1b  1c1d  1e1f
0f0f  0f0f  0f0f  0f0f  0f0f  0f0f  0f0f  0f0f
1011  1213  1415  1617  1819  1a1b  1c1d  1e1f
1010  1010  1010  1010  1010  1010  1010  1010

1011  1213  1415  1617  1819  1a1b  1c1d  1e1f
1111  1111  1111  1111  1111  1111  1111  1111
1111  1213  1415  1617  1819  1a1b  1c1d  1e1f
1212  1212  1212  1212  1212  1212  1212  1212
1212  1213  1415  1617  1819  1a1b  1c1d  1e1f
1313  1313  1313  1313  1313  1313  1313  1313
1313  1313  1415  1617  1819  1a1b  1c1d  1e1f
1414  1414  1414  1414  1414  1414  1414  1414
1414  1414  1415  1617  1819  1a1b  1c1d  1e1f
1515  1515  1515  1515  1515  1515  1515  1515
1515  1515  1515  1617  1819  1a1b  1c1d  1e1f
1616  1616  1616  1616  1616  1616  1616  1616
1616  1616  1616  1617  1819  1a1b  1c1d  1e1f
1717  1717  1717  1717  1717  1717  1717  1717
1717  1717  1717  1717  1819  1a1b  1c1d  1e1f
1818  1818  1818  1818  1818  1818  1818  1818
1818  1818  1818  1818  1819  1a1b  1c1d  1e1f
1919  1919  1919  1919  1919  1919  1919  1919
1919  1919  1919  1919  1919  1a1b  1c1d  1e1f
```

**TABLE II (continued)**

| | | | | | | | |
|---|---|---|---|---|---|---|---|
| 1a1a | 1a1a | 1a1a | 1a1a | 1a1a | 1a1a | 1a1a | 1a1a |
| 1a1a | 1a1a | 1a1a | 1a1a | 1a1a | 1a1b | 1c1d | 1e1f |
| 1b1b | 1b1b | 1b1b | 1b1b | 1b1b | 1b1b | 1b1b | 1b1b |
| 1b1b | 1b1b | 1b1b | 1b1b | 1b1b | 1b1b | 1c1d | 1e1f |
| 1c1c | 1c1c | 1c1c | 1c1c | 1c1c | 1c1c | 1c1c | 1c1c |
| 1c1c | 1c1c | 1c1c | 1c1c | 1c1c | 1c1c | 1c1d | 1e1f |
| 1d1d | 1d1d | 1d1d | 1d1d | 1d1d | 1d1d | 1d1d | 1d1d |
| 1d1d | 1d1d | 1d1d | 1d1d | 1d1d | 1d1d | 1d1d | 1e1f |
| 1e1e | 1e1e | 1e1e | 1e1e | 1e1e | 1e1e | 1e1e | 1e1e |
| 1e1e | 1e1e | 1e1e | 1e1e | 1e1e | 1e1e | 1e1e | 1e1f |
| 1f1f | 1f1f | 1f1f | 1f1f | 1f1f | 1f1f | 1f1f | 1f1f |
| 1f1f | 1f1f | 1f1f | 1f1f | 1f1f | 1f1f | 1f1f | 1f1f |

Since the method set forth with respect to the first embodiment above determines an average of background from a group of samples around the current pel, if samples are taken in an all-black area such as off the edge of the frame, a skewed average will result causing an erroneous correction. Therefore, for pels in the band around the perimeter of the image, the average is taken including samples at the opposite edge of the image as if the image had been wrapped around so that the corresponding opposite edges were adjacent. Although this technique is an improvement over the prior art, there is still room for improvement since shading for example at the right and left edges of an image may not be the same due to external conditions. Table III is a transfer function showing the seven bit correction value for five bit shading correction input. Table III, like Table I is required only because of the signal path limitations of the particular image processor being used.

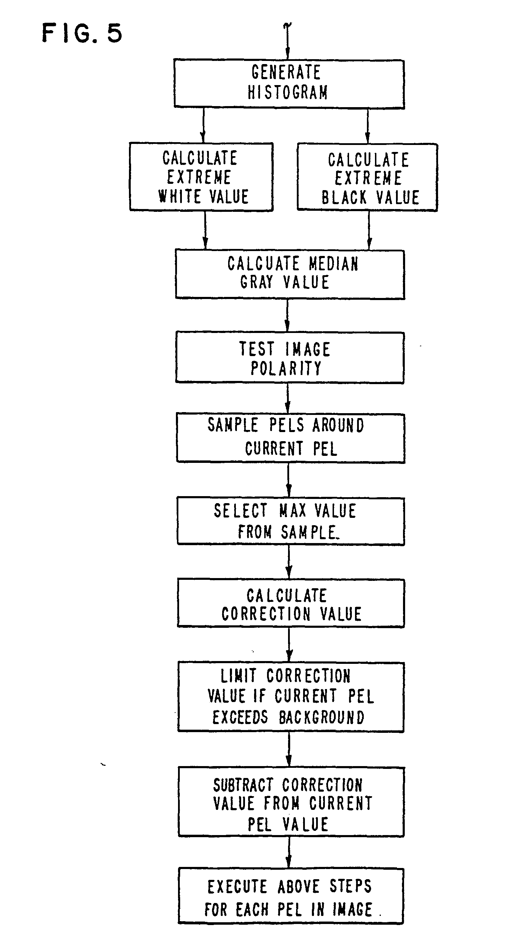

Referring now to FIG. 5, a second embodiment of the present invention will be described.

The steps of generating a histogram, calculating extreme white and black values in the image, calculating a median gray scale value and testing for image polarity are common with the first embodiment described above and each of the steps individually is very straightforward.

In the second embodiment, the step of sampling pels around the current pel becomes an adaptive process whereby a fixed number of neighborhood pels are samples with the current pel and the maximum white intensity value from the group is stored. A block of these groups are then compared for the maximum white in a larger area and if the maximum light intensity value of the larger sampled area exceeds the intensity value stored for the smaller groups, the greater maximum white intensity value is stored in place of the smaller value.

TABLE III

| | | | | | | | |
|---|---|---|---|---|---|---|---|
| 1414 | 1413 | 1313 | 1212 | 1211 | 1111 | 1010 | 100f |
| 0f0f | 0e0e | 0e0d | 0d0d | 0c0c | 0c0b | 0b0b | 0a0a |
| 0a09 | 0909 | 0808 | 0807 | 0707 | 0606 | 0605 | 0505 |
| 0404 | 0403 | 0303 | 0202 | 0201 | 0101 | 0000 | 0000 |
| ffff | fffe | fefe | fdfd | fdfc | fcfc | fbfb | fbfa |
| fafa | f9f9 | f9f8 | f8f8 | f7f7 | f7f6 | f6f6 | f5f5 |
| f5f4 | f4f4 | f3f3 | f3f2 | f2f2 | f1f1 | f1f0 | f0f0 |
| efef | efee | eeee | eded | edec | ecec | ebeb | ebeb |
| ebeb | ebeb | ebeb | ebeb | ebeb | ebeb | ebeb | ebeb |
| ebeb | ebeb | ebeb | ebeb | ebeb | ebeb | ebeb | ebeb |
| ebeb | ebeb | ebeb | ebeb | ebeb | ebeb | ebeb | ebeb |
| ebeb | ebeb | ebeb | ebeb | ebeb | ebeb | ebeb | ebeb |
| ebeb | ebeb | ebeb | ebeb | ebeb | ebeb | ebeb | ebeb |
| ebeb | ebeb | ebeb | ebeb | ebeb | ebeb | ebeb | ebeb |
| ebeb | ebeb | ebeb | ebeb | ebeb | ebeb | ebeb | ebeb |
| ebeb | ebeb | ebeb | ebeb | ebeb | ebeb | ebeb | ebeb |

Sign Bit for Remapping to True Correction

| | | | | | | | |
|---|---|---|---|---|---|---|---|
| 0000 | 0000 | 0000 | 0000 | 0000 | 0000 | 0000 | 0000 |
| 0000 | 0000 | 0000 | 0000 | 0000 | 0000 | 0000 | 0000 |
| 0000 | 0000 | 0000 | 0000 | 0000 | 0000 | 0000 | 0000 |
| 0000 | 0000 | 0000 | 0000 | 0000 | 0000 | 0000 | 0000 |
| 0f0f | 0f0f | 0f0f | 0f0f | 0f0f | 0f0f | 0f0f | 0f0f |
| 0f0f | 0f0f | 0f0f | 0f0f | 0f0f | 0f0f | 0f0f | 0f0f |
| 0f0f | 0f0f | 0f0f | 0f0f | 0f0f | 0f0f | 0f0f | 0f0f |
| 0f0f | 0f0f | 0f0f | 0f0f | 0f0f | 0f0f | 0f0f | 0f0f |
| 0f0f | 0f0f | 0f0f | 0f0f | 0f0f | 0f0f | 0f0f | 0f0f |
| 0f0f | 0f0f | 0f0f | 0f0f | 0f0f | 0f0f | 0f0f | 0f0f |
| 0f0f | 0f0f | 0f0f | 0f0f | 0f0f | 0f0f | 0f0f | 0f0f |
| 0f0f | 0f0f | 0f0f | 0f0f | 0f0f | 0f0f | 0f0f | 0f0f |
| 0f0f | 0f0f | 0f0f | 0f0f | 0f0f | 0f0f | 0f0f | 0f0f |
| 0f0f | 0f0f | 0f0f | 0f0f | 0f0f | 0f0f | 0f0f | 0f0f |
| 0f0f | 0f0f | 0f0f | 0f0f | 0f0f | 0f0f | 0f0f | 0f0f |
| 0f0f | 0f0f | 0f0f | 0f0f | 0f0f | 0f0f | 0f0f | 0f0f |

If the maximum white intensity value from the block sample as described above is not within the range of acceptable background (white) values indicating that the maximum white intensity value stored is in the gray region, a bit is set in an overlay plane in the image processor causing the sampling process to be repeated iteratively on larger blocks of pels until a maximum white intensity value is achieved which falls within the acceptable range R as shown in FIG. 4, or a predetermined number of iterations have been performed.

Table IV shows the transfer function for a look up table for the maximum white intensity value selection in a black-on-white image. Note that the first several bits of data have the most significant bit set indicating

8

that the maximum intensity value sample was not within the acceptable range.

A bit is set in the overlay plane when maximum intensity value sampled is not within the acceptable range. This bit causes the sampled area to be expanded and a new set of samples taken. If an acceptable Max value is obtained, the bit is cleared and a correction value may be obtained. If acceptable Max value is not obtained, the process is iteratively repeated until a predetermined limit of iterations is achieved or an acceptable Max value is found.

The correction value may then be obtained through a table look up employing the transfer function of Table II described above with respect to the first embodiment of the present invention. A second filtering is achieved by taking an average of the four nearest neighbor intensity values to the current pel. This average is locked out at the edges of the image in accordance with the overlay control described above.

**TABLE IV**

| | | | | | | | |
|------|------|------|------|------|------|------|------|
| 8080 | 8080 | 8080 | 8000 | 0101 | 0101 | 0101 | 0101 |
| 0202 | 0202 | 0202 | 0202 | 0303 | 0303 | 0303 | 0303 |
| 0404 | 0404 | 0404 | 0404 | 0505 | 0505 | 0505 | 0505 |
| 0606 | 0606 | 0606 | 0606 | 0707 | 0707 | 0707 | 0707 |
| 0808 | 0808 | 0808 | 0808 | 0909 | 0909 | 0909 | 0909 |
| 0a0a | 0a0a | 0a0a | 0a0a | 0b0b | 0b0b | 0b0b | 0b0b |
| 0c0c | 0c0c | 0c0c | 0c0c | 0d0d | 0d0d | 0d0d | 0d0d |
| 0e0e | 0e0e | 0e0e | 0e0e | 0f0f | 0f0f | 0f0f | 0f0f |
| 1010 | 1010 | 1010 | 1010 | 1111 | 1111 | 1111 | 1111 |
| 1212 | 1212 | 1212 | 1212 | 1313 | 1313 | 1313 | 1313 |
| 1414 | 1414 | 1414 | 1414 | 1515 | 1515 | 1515 | 1515 |
| 1616 | 1616 | 1616 | 1616 | 1717 | 1717 | 1717 | 1717 |
| 1818 | 1818 | 1818 | 1818 | 1919 | 1919 | 1919 | 1919 |
| 1a1a | 1a1a | 1a1a | 1a1a | 1b1b | 1b1b | 1b1b | 1b1b |
| 1c1c | 1c1c | 1c1c | 1c1c | 1d1d | 1d1d | 1d1d | 1d1d |
| 1e1e | 1e1e | 1e1e | 1e1e | 1f1f | 1f1f | 1f1f | 1f1f |
| 0020 | 4060 | 80a0 | c0e0 | 0020 | 4060 | 80a0 | c0e0 |
| 0020 | 4060 | 80a0 | c0e0 | 0002 | 4060 | 80a0 | c0e0 |
| 0020 | 4060 | 80a0 | c0e0 | 0020 | 4060 | 80a0 | c0e0 |
| 0020 | 4060 | 80a0 | c0e0 | 0020 | 4060 | 80a0 | c0e0 |
| 0020 | 4060 | 80a0 | c0e0 | 0020 | 4060 | 80a0 | c0e0 |
| 0020 | 4060 | 80a0 | c0e0 | 0020 | 4060 | 80a0 | c0e0 |
| 0020 | 4060 | 80a0 | c0e0 | 0020 | 4060 | 80a0 | c0e0 |
| 0020 | 4060 | 80a0 | c0e0 | 0020 | 4060 | 80a0 | c0e0 |
| 0020 | 4060 | 80a0 | c0e0 | 0020 | 4060 | 80a0 | c0e0 |
| 0020 | 4060 | 80a0 | c0e0 | 0020 | 4060 | 80a0 | c0e0 |
| 0020 | 4060 | 80a0 | c0e0 | 0020 | 4060 | 80a0 | c0e0 |
| 0020 | 4060 | 80a0 | c0e0 | 0020 | 4060 | 80a0 | c0e0 |
| 0020 | 4060 | 80a0 | c0e0 | 0020 | 4060 | 80a0 | c0e0 |
| 0020 | 4060 | 80a0 | c0e0 | 0020 | 4060 | 80a0 | c0e0 |
| 0020 | 4060 | 80a0 | c0e0 | 0020 | 4060 | 80a0 | c0e0 |

In operation, a mask is set in two separate overlay planes wherein the mask applies to the entire image if set on, and to the band of pels around the perimeter of the image if set off. During normal processing of pels in the center of the image, the first overlay plane is set on causing the processor to sum samples and average the summed samples in the neighborhood of the current pel to achieve a correction value.

For pels in the edge band around the perimeter image, the first overlay plane is set off thus inhibiting the summing of neighborhood samples.

The second overlay plane controls look up table operation. If the second overlay plane is on the current pel is multiplied by a constant through a look up table such as is shown in Table V below. This technique greatly reduces the edge effects on the shading correction.

The nonlinear shading filter described above provides a variable pass band filtering by enabling lower pass band whenever the correction derived from earlier operation indicates a failure of the correction together with noise averaging as a final step with lock out of the averaging at the borders of the image.

### TABLE V

| | | | | | | | |
|------|------|------|------|------|------|------|------|
| 0004 | 080c | 1014 | 181c | 2024 | 282c | 3034 | 383c |
| 4044 | 484c | 5054 | 585c | 6064 | 686c | 7074 | 787c |
| 8084 | 888c | 9094 | 989c | a0a4 | a8ac | b0b4 | b8bc |
| c0c4 | c8cc | d0d4 | d8dc | e0e4 | e8ec | f0f4 | f8fc |
| 0104 | 090c | 1114 | 191c | 2124 | 292c | 3134 | 393c |
| 4144 | 494c | 5154 | 595c | 6164 | 696c | 7174 | 797c |
| 8184 | 898c | 9194 | 999c | a1a4 | a9ac | b1b4 | b9bc |
| c1c4 | c9cc | d1d4 | d9dc | e1e4 | e9ec | f1f4 | f9fc |
| 0204 | 0a0c | 1214 | 1a1c | 2224 | 2a2c | 3234 | 3a3c |
| 4244 | 4a4c | 5254 | 5a5c | 6264 | 6a6c | 7274 | 7a7c |
| 8284 | 8a8c | 9294 | 9a9c | a2a4 | aaac | b2b4 | babc |
| c2c4 | cacc | d2d4 | dadc | e2e4 | eaec | f2f4 | fafc |
| 0304 | 0b0c | 1314 | 1b1c | 2324 | 2b2c | 3334 | 3b3c |
| 4344 | 4b4c | 5354 | 5b5c | 6364 | 6b6c | 7374 | 7b7c |
| 8384 | 8b8c | 9394 | 9b9c | a3a4 | abac | b3b4 | bbbc |
| c3c4 | cbcc | d3d4 | dbdc | e3e4 | ebec | f3f4 | fbfc |

### Claims

1. A method of correcting shading effects in video images having a plurality of pels, wherein each of said pels is represented by a gray scale intensity signal having a plurality of bits, comprising the steps of:

a. generating a histogram of distribution of gray scale intensity levels of pels in the entire image;

b. calculating from said histogram a maximum white gray scale intensity value, a maximum black gray scale intensity value and a gray scale value intermediate these values;

c. determining a range of background gray scale variation by comparison of the values calculated in step (b);

d. sampling gray scale intensity values of pels in a region around a current pel;

e. calculating a correction value for a current pel by comparison of said sampled intensities to one or more of said values calculated in (b) and to said range of background variation;

f. correcting said current pel gray scale value by subtracting said correction value therefrom to achieve a shading corrected value for said current pel;

g. executing each of the above steps for each pel in said image to correct for undesired shading effects in said image.

2. A method as claimed in Claim 1, further comprising the step of determining the image polarity from the intermediate value and the maximum black and white gray scale intensity values.

3. A method as claimed in either of the preceding claims, wherein the correction value for a current pel is the average correction term, where a correction term is the difference between the intermediate value and a sampled intensity.

4. A method as claimed in Claim 3, wherein a correction term is set to zero if it is not within the range of background variation.

5. A method as claimed in Claim 1 further comprising the step of selecting a maximum color value from said sampled gray scale intensity values to obtain a correction value.

6. A method according to Claim 5, further comprising the steps of:

testing said maximum color value to determine if said maximum color value is within said range of acceptable background values; sampling gray scale values over a predetermined expanded area of said image if said maximum color value is outside said range; repeating said steps of testing and sampling until a maximum color value s found within said area or a predetermined number of iterations of said testing and sampling steps has been executed.

7. Apparatus for correcting shading effects in video images having a plurality of pels, wherein each of said pels is represented by a gray scale intensity signal having a plurality of bits, comprising the steps of:

a. means for generating a histogram of distribution of gray scale intensity levels of pels in the entire image;

b. means for calculating from said histogram a maximum white gray scale intensity value, a maximum black gray scale intensity value and a gray scale value intermediate these values;

c. means for determining a range of background gray scale variation by comparison of the values calculated in step (b);

d. means for sampling gray scale intensity values of pels in a region around a current pel;

e. means for calculating a correction value for a current pel by comparison of said sampled intensities to one or more of said values calculated in (b) and to said range of background variation;

f. means for correcting said current pel gray scale value by subtracting said correction value therefrom to achieve a shading corrected value for said current pel;

g. means for executing each of the above steps for each pel in said image to correct for undesired shading effects in said image.

**Patentansprüche**

1. Verfahren der Korrektur von Schatteneffekten in Videobildern mit mehreren Pixels, in dem jedes der besagten Pixel durch ein mehrere Bits enthaltendes Grauskalalntensitätssignal dargestellt ist, folgende Schritte enthaltend:

a. Erzeugung eines Histogramms der Verteilung der Grauskalaintensitätsstufen der Pixels im gesamten Bild;

b. Berechnung eines Höchstwerts der Grauskalaintensität für Weiß, eines Höchstwertes der Grauskalaintensität für Schwarz, und eines Grauskalawertes zwischen diesen Werten;

c. Ermittlung eines Bereichs der Grauskalawertschwankung des Hintergrunds durch Vergleich der in Schritt (b) ermittelten Werte;

d. Bemusterung der Werte der Grauskalaintensität der Pixel in einer Zone um ein laufendes Pixel herum;

e. Berechnung eines Korrekturwerts für ein laufendes Pixel durch Vergleich der besagten bemusterten Stärken mit einem oder mehreren der besagten in (b) errechneten Werten und mit besagtem Hintergrundschwankungsbereich;

f. Korrektur des besagten laufenden Pixel-Grauskalawertes durch Abzug des besagten Korrekturwerts von ihm, um für das besagte laufende pixel einen Wert mit Schattenkorrektur zu erhalten;

g. Ausführung eines jeden der oben genannten Schritte für jedes Pixel in besagtem, um die unerwünschten Schatteneffekte in besagtem Bild zu korrigieren.

2. Verfahren gemäß Anspruch 1, ferner den Schritt der Ermittlung der Bildpolung vom besagten Mittelwert und den Höchstwerten der Grauskalastärke für schwarz und weiß enthaltend.

3. Verfahren gemäß einem der vorangehenden Ansprüche, in dem der Korrekturwert für ein laufendes Pixel der Durchschnittskorrekturausdruck ist, wobei ein Korrekturausdruck der Unterschied zwischen dem Zwischenwert und einer bemusterten Stärke ist.

4. Verfahren gemäß Anspruch 3, in dem ein Korrekturausdruck auf Null eingestellt wird, wenn er sich nicht innerhalb des Bereichs der Hintergrundschwankung befindet.

5. Verfahren gemäß Anspruch 1, ferner den Schritt der Auswahl eines Farben-Höchstwerts von besagten bemusterten Grauskalaintensitätswerten enthaltend, um einen Korrekturwert zu erhalten.

6. Verfahren gemäß Anspruch 5, ferner folgende Schritte enthaltend:

Testen des besagten Farbenhöchstwertes, um zu ermitteln, ob der besagte Farbenhöchstwert innerhalb des besagten Bereichs akzeptierbarer Hintergrundwerte liegt;

Bemusterung der Grauskalawerte über eine vorgegebene ausgeweitete Zone des besagten Bildes, wenn besagter Farbenhöchstwert außerhalb des besagten Bereichs liegt; Wiederholung der besagten Testschritte und Probe-entnahme, bis ein Farben-Höchstwert s innerhalb besagter Zone oder gefunden wird oder bis eine vorgegebene Anzahl Wiederholungen der besagten Test- und Probenschritte ausgeführt wurde.

7. Gerät für die Korrektur der Schatteneffekte in Videobildern mit mehreren Pixeln, in dem jedes Pixel durch ein Graustärken-Intensitätssignal mit mehreren Bits dargestellt wird, enthaltend:

a. Mittel für die Erzeugung eines Histogramms der Verteilung der Grauskalaintensitätsstufen der Pixels im gesamten Bild;

# EP 0 113 016 B1

b. Mittel für die Berechnung eines Höchstwerts der Grauskalaintensität für Weiß, eines Höchstwertes der Grauskalaintensität für Schwarz, und eines Grauskalawertes zwischen diesen Werten;

c. Mittel für die Ermittlung eines Bereichs der Grauskalawertschwankung des Hintergrunds durch Vergleich der in Schritt (b) ermittelten Werte;

d. Mittel für die Bemusterung der Werte der Grauskalaintensität der Pixel in einer Zone um ein laufendes Pixel herum;

e. Mittel für die Berechnung eines Korrekturwerts für ein laufendes Pixel durch Vergleich der besagten bemusterten Stärken mit einem oder mehreren der besagten in (b) errechneten Werten und mit besagtem Hintergrundschwankungsbereich;

f. Mittel für die Korrektur des besagten laufenden Pixel-Grauskalawertes durch Abzug des besagten Korrekturwerts von ihm, um für das besagte laufende Pixel einen Wert mit Schattenkorrektur zu erhalten;

g. Mittel für die Ausführung eines jeden der oben genannten Schritte für jedes Pixel in besagtem, um die unerwünschten Schatteneffekte im besagten Bild zu korrigieren.

## Revendications

1. Procédé pour corriger des effets d'ombres dans des images vidéo comportant une pluralité de pixels, dans lequel chacun de ces pixels est représenté par un signal d'intensité de l'échelle des gris, signal qui comporte une pluralité de bits, comprenant les opérations consistant à:

a) générer un histogramme de la distribution de niveaux d'intensité sur l'échelle des gris de pixels dans toute l'image;

b) calculer, à partir de cet histogramme, une valeur d'intensité de blanc maximal sur l'échelle des gris, une valeur d'intensité de noir maximal sur l'échelle des gris et une valeur de l'échelle des gris intermédiaire entre ces valeurs;

c) déterminer une plage de variation sur l'échelle des gris pour le fond, par la comparaison des valeurs calculées dans l'opération (b);

d) échantillonner des valeurs d'intensité sur l'échelle des gris de pixels dans une région autour d'un pixel en cours de traitement;

e) calculer une valeur de correction pour un pixel en cours de traitement en comparant les intensités échantillonnées à une ou plusieurs des valeurs calculées dans (b) et à la plage de variation du fond;

f) corriger la valeur de gris du pixel en cours de traitement en déduisant d'elle la valeur de correction afin d'obtenir une valeur corrigée d'ombrage pour ce pixel en cours; et

g) exécuter chacune des opérations ci-dessus pour chaque pixel dans l'image afin de la corriger d'effets d'ombres indésirés.

2. Procédé selon la revendication 1 comprenant en outre l'opération qui consiste à déterminer la polarité de l'image à partir de la valeur intermédiaire et des valeurs d'intensité d'échelle des gris, de noir maximal et de blanc maximal.

3. Procédé selon l'une ou l'autre des revendications précédentes, dans lequel la valeur de correction pour un pixel en cours de traitement est le terme de correction moyen, un terme de correction étant la différence entre la valeur intermédiaire et une intensité échantillonnée.

4. Procédé selon la revendication 3, dans lequel un terme de correction est ajusté à zéro s'il n'est pas compris dans la plage de variation du fond.

5. Procédé selon la revendication 1 comprenant en outre l'opération consistant à sélecter une valeur de couleur maximale à partir des valeurs d'intensité d'échelle des gris échantillonnées afin d'obtenir une valeur de correction.

6. Procédé selon la revendication 5 comprenant en outre les opérations consistant à:

tester la valeur de couleur maximale pour déterminer si elle est comprise dans la plage de valeurs de fond acceptables; échantillonner des valeurs d'échelle des gris sur une zone plus étendue, prédéterminée, de l'image si la valeur de couleur maximale est en dehors de la plage; répéter les opérations de test et d'échantillonnage jusqu'à ce que soit trouvée une valeur de couleur maximale comprise dans cette zone, ou jusqu'à ce qu'un nombre prédéterminé d'itérations de ces opérations de test et d'échantillonnage ait été exécuté.

7. Dispositif pour corriger des effets d'ombres dans des images vidéo comportant une pluralité de pixels, dans lequel chacun des pixels est représenté par un signal d'intensité de l'échelle des gris, signal qui présente une pluralité de bits, comprenant:

a) un moyen pour générer un histogramme de la distribution de niveaux d'intensité sur l'échelle des gris de pixels dans toute l'image;

b) un moyen pour calculer, à partir de cet histogramme, une valeur d'intensité de blanc maximal sur l'échelle, des gris, une valeur d'intensité de noir maximal sur l'échelle des gris et une valeur de l'échelle des gris intermédiaire entre ces valeurs;

c) un moyen pour déterminer une plage de variation sur l'échelle des gris pour le fond, par la comparaison des valeurs calculées dans l'opération (b);

d) un moyen pour échantillonner des valeurs d'intensité sur l'échelle des gris de pixels dans une région autour d'un pixel en cours de traitement;

e) un moyen pour calculer une valeur de correction pour un pixel en cours de traitement en comparant les intensités échantillonnées à une ou plusieurs des valeurs calculées dans (b) et à la plage de variation du fond;

f) un moyen pour corriger la valeur de gris du pixel en cours de traitement en déduisant d'elle la valeur de correction afin d'obtenir une valeur corrigée d'ombrage pour ce pixel en cours; et

g) un moyen pour exécuter chacune des opérations ci-dessus pour chaque pixel dans l'image afin de la corriger d'effets d'ombres indésirés.

FIG. 1.1

SCAN
LINE

FIG. 1.2
IDEAL VIDEO SIGNAL

FIG. 1.3

VIDEO SIGNAL WITH SHADING DEFECTS

1

RAW IMAGE DATA

FIG. 2

IMAGE
BUFFER ⌐12

HISTOGRAM
ACQUISTION ⌐14

EXTREMA & MEDIAN
DETERMINATION ⌐16

LOOK UP TABLE ⌐18

SHADING
CORRECTION ⌐20
FILTER

SHADING CORRECTED VIDEO

2

# FIG. 3

# FIG. 4

SHADING CORRECTED HISTOGRAM

## FIG. 5

```
        ┌─────────────────┐
        │    GENERATE     │
        │   HISTOGRAM     │
        └─────────────────┘
           │           │
           ▼           ▼
  ┌──────────────┐  ┌──────────────┐
  │  CALCULATE   │  │  CALCULATE   │
  │   EXTREME    │  │   EXTREME    │
  │ WHITE VALUE  │  │ BLACK VALUE  │
  └──────────────┘  └──────────────┘
           │           │
           ▼           ▼
        ┌─────────────────┐
        │ CALCUATE MEDIAN │
        │   GRAY VALUE    │
        └─────────────────┘
                 │
                 ▼
        ┌─────────────────┐
        │   TEST IMAGE    │
        │    POLARITY     │
        └─────────────────┘
                 │
                 ▼
        ┌─────────────────┐
        │ SAMPLE PELS AROUND │
        │   CURRENT PEL   │
        └─────────────────┘
                 │
                 ▼
        ┌─────────────────┐
        │ SELECT MAX VALUE │
        │  FROM SAMPLE.   │
        └─────────────────┘
                 │
                 ▼
        ┌─────────────────┐
        │   CALCULATE     │
        │ CORRECTION VALUE │
        └─────────────────┘
                 │
                 ▼
        ┌─────────────────┐
        │ LIMIT CORRECTION │
        │ VALUE IF CURRENT PEL │
        │ EXCEEDS BACKGROUND │
        └─────────────────┘
                 │
                 ▼
        ┌─────────────────┐
        │ SUBTRACT CORRECTION │
        │ VALUE FROM CURRENT │
        │   PEL VALUE     │
        └─────────────────┘
                 │
                 ▼
        ┌─────────────────┐
        │ EXECUTE ABOVE STEPS │
        │ FOR EACH PEL IN IMAGE. │
        └─────────────────┘
```

FIG. 6.1

FIG. 6.2

FIG. 6.3